# EUROPEAN PATENT APPLICATION

(11) **EP 4 397 580 A1**
(43) Date of publication of application: **10.07.2024**
(21) Application number: 23203958.6
(22) Date of filing: 13.11.2023
(51) Int. Cl.: B62J 6/045, B62J 45/422, B62L 3/02

(54) **INDUCTION-TYPE BRAKE-ALARMING TRIGGERING DEVICE WITH SELF-ADAPTIVE STRUCTURE**

(30) Priority: 05.12.2022 CN 202211548169
(71) Applicant: Meizhou Frii Lens Electronic Technology Co., Ltd., Meizhou City, Guangdong 514779 (CN)
(72) Inventor: SHUO-YEN, HSU, Meizhou City, 514779 (CN); SHUO-CHIH, HSU, Meizhou City, 514779 (CN); TAU-JENG, HSU, Meizhou City, 514779 (CN)
(74) Representative: Sahuquillo Huerta, Jesús

(57) **Abstract**

An induction-type brake-alarming triggering device with a self-adaptive structure includes a mounting base (1) provided at a brake-lever base or a handle bar on a side of a brake handle, a first mounting through hole (1a) is provided on one side of the mounting base (1) that faces the brake handle, a self-adaptive elastic extending assembly (4) is provided at an opening part of the first mounting through hole (1a), and an induction-type sensor (5) facing the brake handle is provided at the self-adaptive elastic extending assembly (4). When the brake handle is moved toward the handle bar to perform a braking action, an intensity of a light ray that is reflected back from the brake handle and received by the induction-type sensor (5) is increased, and the induction-type sensor (5) sends a braking signal to the micro-controlling module (3). When the brake handle touches a sensing terminal, the self-adaptive elastic extending assembly (4) correspondingly contracts.

## Description

### TECHNICAL FIELD

The present disclosure relates to a brake-alarming triggering device, and particularly relates to an induction-type brake-alarming triggering device with a self-adaptive structure.

### BACKGROUND

The brake is one of the important safeguards for the riding safety, and a good braking system can effectively improve the personal safety in riding. There are mainly two modes of controlling the brake light by smart braking systems currently worldwide:

Firstly, a braking-signal triggering device is installed at one end of the brake cable, detects the action of the brake cable, and accordingly automatically gives a braking signal to lighten the light. In such a mode, the braking-signal triggering device is usually required to contact the brake cable, which has the disadvantage of a complicated structure, and has a high failure rate.

Secondly, an acceleration sensor is used to detect the braking. However, erroneous determination easily happens due to a reduced speed in grade climbing of the vehicle, which has the disadvantage of a low accuracy.

In view of the above problems, the inventor previously provides a triggering device that is installed between the brake handle and the handle bar and triggers by using a spring. Such a triggering mode cannot only automatically perform the light lightening triggering, but also the device is installed at the brake handle, and the light lightening is triggered merely when the brake handle acts, which has the advantages of accurate triggering, a simple structure and a low cost. However, it has been found in practical usage that, because the spring is exposed, it is susceptible to influence by an external force and thus be damaged.

### SUMMARY

An object of the present disclosure is to, in view of the above-described disadvantages of the prior art, provide an induction-type brake-alarming triggering device with a self-adaptive structure that has a compact structure, accurate sensing and can perform self-adaptive stretching.

The technical solutions of the present disclosure are realized as follows: an induction-type brake-alarming triggering device with a self-adaptive structure, wherein the device comprises a mounting base provided at a brake-lever base or a handle bar on a side of a brake handle, an power-supply module and a micro-controlling module are provided in the mounting base, and the micro-controlling module is wirelessly connected to an external warning light via a wireless-signal emitting module; and
the power-supply module is connected to the micro-controlling module;
wherein a first mounting through hole is provided on one side of the mounting base that faces the brake handle, a self-adaptive elastic extending assembly is provided at an opening part of the first mounting through hole, and an induction-type sensor facing the brake handle is provided at the self-adaptive elastic extending assembly;
in an initial state, a distance between the induction-type sensor and the brake handle is 0.5-5cm, and when the brake handle is moved toward the handle bar to perform a braking action, an intensity of a light ray that is reflected back from the brake handle and received by the induction-type sensor is increased or a duration of the reflecting-back of the light ray is reduced, and the induction-type sensor sends a braking signal to the micro-controlling module; and
when the brake handle touches a sensing terminal, the self-adaptive elastic extending assembly correspondingly contracts.

Optionally, in the induction-type brake-alarming triggering device with a self-adaptive structure, a reflection enhancing member in cooperation with the induction-type sensor is provided at the vehicle brake handle.

Optionally, in the induction-type brake-alarming triggering device with a self-adaptive structure, an inner cavity of the mounting base is formed by a primary cavity horizontally provided and a secondary cavity that is integrally formed with and in communication with the primary cavity, the primary cavity and the secondary cavity cooperate to be of a ┌ shape, and a quickly detachable pipe clamp is provided at a step formed by the cooperation between the primary cavity and the secondary cavity; and
the first mounting through hole is located at a proximal end of a lower end of the secondary cavity and faces the brake handle.

Optionally, in the induction-type brake-alarming triggering device with a self-adaptive structure, the self-adaptive elastic extending assembly comprises an extending sleeve nested inside the first mounting through hole and having one opened end, a second mounting through hole facing the brake handle is provided at a bottom inside the extending sleeve, a protecting lens is provided inside the second mounting through hole, and the induction-type sensor is located inside the extending sleeve; and
a tensioning spring is provided in an axial direction of the extending sleeve between the extending sleeve and an inner wall of the mounting base.

Optionally, in the induction-type brake-alarming triggering device with a self-adaptive structure, an axially regulating assembly for regulating an initial distance between the extending sleeve and the brake handle is provided between the first mounting through hole and the extending sleeve.

Optionally, in the induction-type brake-alarming triggering device with a self-adaptive structure, the axially regulating assembly is formed by a rotary-knob base fixed inside the first mounting through hole and having an internal thread and a rotary-knob regulating cylinder thread-connected to the rotary-knob base and having one opened end, a third mounting through hole facing the brake handle is provided at a bottom inside the rotary-knob regulating cylinder, and the extending sleeve is slidably nested inside the third mounting through hole.

Optionally, in the induction-type brake-alarming triggering device with a self-adaptive structure, the axially regulating assembly is formed by a regulating cylinder slidably nested inside the first mounting through hole and having one opened end and a positioning screw provided on the mounting base and in cooperation with the regulating cylinder; and
after a distance of the regulating cylinder has been regulated in place, the regulating cylinder is fixed by using the positioning screw.

Optionally, in the induction-type brake-alarming triggering device with a self-adaptive structure, in the initial state, the distance between the induction-type sensor and the brake handle is 0.8-2cm.

In the present disclosure, by using the above-described structure, by providing the mounting base at the brake-lever base or the handle bar on a side of the brake handle, and providing the induction-type sensor facing the brake handle at the self-adaptive elastic extending assembly, and by identifying the increased intensity of the light ray that is reflected back when the brake handle acts or the reduced duration of the reflecting-back of the light ray, the braking action is identified and in turn the braking signal is emitted. Further, by delicately installing the induction-type sensor at the self-adaptive elastic extending assembly, the self-adaptive elastic extending assembly can be closer to the brake handle. It is obtained by experimentation that, when the distance between the induction-type sensor and the brake handle is controlled to be within 0.5-5cm, not only the interference of the external can be effectively reduced, but also the braking action can be further accurately detected. Furthermore, because no triggering connector exists between the mounting base and the brake handle, the device is not easily damaged by an external force, which can effectively prolong the service life.

### BRIEF DESCRIPTION OF THE DRAWINGS

The present disclosure will be described in further detail below with reference to the embodiments in the drawings, which do not function to limit the present disclosure in any form.
FIG. 1 is a schematic perspective structural diagram of the first embodiment of the present disclosure;
FIG. 2 is a schematic internal structural diagram of the first embodiment of the present disclosure;
FIG. 3 is a partially enlarged schematic diagram of the position A in FIG. 2;
FIG. 4 is a schematic diagram of the usage state of the first embodiment of the present disclosure;
FIG. 5 is a schematic internal structural diagram of the second embodiment of the present disclosure;
FIG. 6 is a partially enlarged schematic diagram of the position B in FIG. 5;
FIG. 7 is a schematic internal structural diagram of the third embodiment of the present disclosure; and
FIG. 8 is a partially enlarged schematic diagram of the position C in FIG. 7.

In the drawings: 1: mounting base; 1a: first mounting through hole; 1b: primary cavity; 1c: secondary cavity; 1d: quickly detachable pipe clamp; 1e: step through hole; 2: power-supply module; 3: micro-controlling module; 4: self-adaptive elastic extending assembly; 4a: extending sleeve; 4b: second mounting through hole; 4c: protecting lens; 4d: tensioning spring; 5: induction-type sensor; 6: reflection enhancing member; 7: rotary-knob base; 8: rotary-knob regulating cylinder; 8a: third mounting through hole; 9: regulating cylinder; 10: positioning screw; and 11: turn-light button.

### DETAILED DESCRIPTION

### The first embodiment

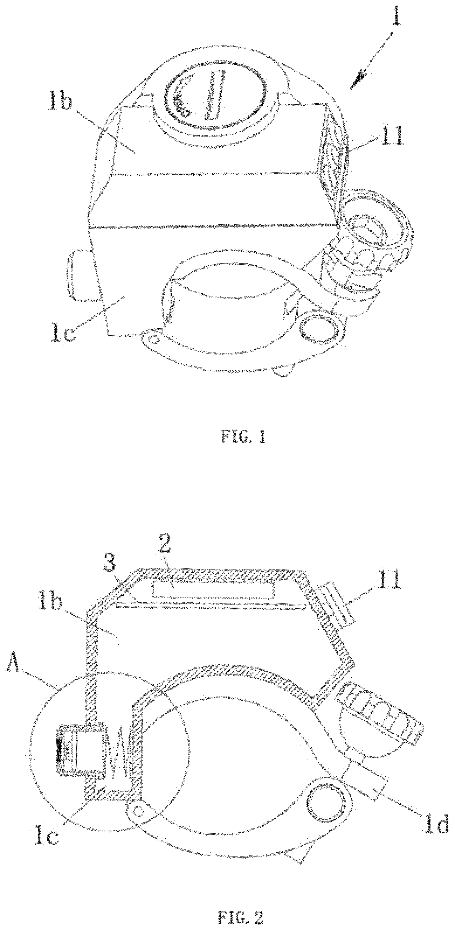

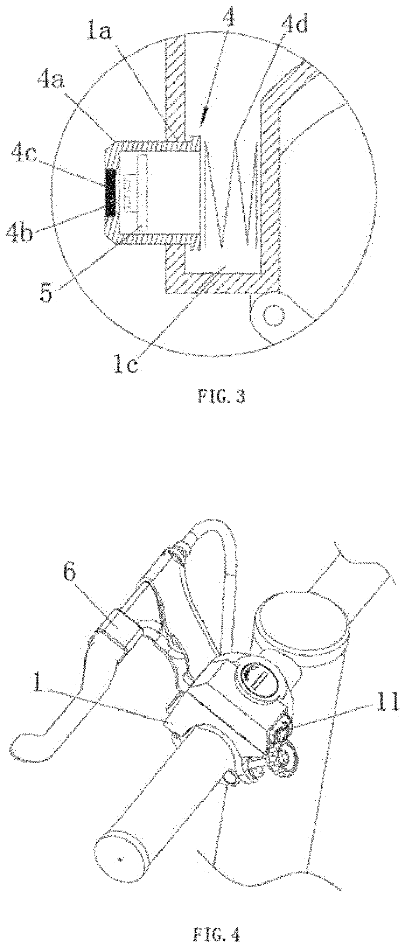

Referring to FIGS. 1 to 4, the induction-type brake-alarming triggering device with a self-adaptive structure according to the present disclosure comprises a mounting base 1 provided at a brake-lever base or a handle bar on a side of a brake handle, an power-supply module 2 and a micro-controlling module 3 are provided in the mounting base 1, the micro-controlling module 3 is wirelessly connected to an external warning light via a wireless-signal emitting module, the wireless-signal emitting module is integrated in the micro-controlling module, and the external warning light is correspondingly connected to a wireless-signal receiving module. The power-supply module 2 is connected to the micro-controlling module 3.

A first mounting through hole 1a is provided on the side of the mounting base 1 that faces the brake handle, a self-adaptive elastic extending assembly 4 is provided at an opening part of the first mounting through hole 1a, and an induction-type sensor 5 facing the brake handle is provided at the self-adaptive elastic extending assembly 4. The induction-type sensor is preferably an infrared proximity sensor or a laser-reflection-type proximity transducer, and, certainly, may also be a magnetic induction sensor. The induction-type sensor may be installed within the mounting base in a manner well known in the art, and its installing mode is not what is claimed in the present disclosure, and is not discussed herein further.

In the initial state, the distance between the induction-type sensor 5 and the brake handle is 0.5-5cm. It is obtained by experimentation that the optimum distance is 0.8-2cm, at which distance the effective detection rate of the induction-type sensor is above 95%. When the brake handle is moved toward the handle bar to perform a braking action, the intensity of a light ray that is reflected back from the brake handle and received by the induction-type sensor 5 is increased or the duration of the reflecting-back of the light ray is reduced, and the induction-type sensor sends a braking signal to the micro-controlling module 3. When the brake handle touches the sensing terminal where the induction-type sensor 5 is located, the self-adaptive elastic extending assembly 4 correspondingly contracts.

By the effect of the self-adaptive elastic extending assembly, the distance between the induction-type sensor 5 and the brake handle can be reduced to the largest extent, to prevent interference of the external. Furthermore, because the self-adaptive elastic extending assembly has the function of stretching, even in braking, when the brake handle touches the sensing terminal, the self-adaptive elastic extending assembly can contract to prevent affecting the braking while preventing colliding the sensing terminal.

In the present embodiment, the self-adaptive elastic extending assembly 4 comprises an extending sleeve 4a nested inside the first mounting through hole 1a and having one opened end, a second mounting through hole 4b facing the brake handle is provided at the bottom inside the extending sleeve 4a, a protecting lens 4c is provided inside the second mounting through hole 4b, and the induction-type sensor 5 is located inside the extending sleeve 4a. A tensioning spring 4d is provided in an axial direction of the extending sleeve 4a between the extending sleeve 4a and the inner wall of the mounting base 1.

Certainly, in order to enable the extending sleeve to stretch smoothly, a guiding sleeve may be provided at the first mounting through hole, to increase the contact with the extending sleeve, to enable it to contract smoothly, which is easily envisaged by a person skilled in the art.

Furthermore, a turn-light button 11 connected to the micro-controlling module is provided at the surface of the mounting base 1. When it is required to steer, a light lightening operation may be performed in advance, to improve the safety of the riding.

Preferably, a reflection enhancing member 6 in cooperation with the induction-type sensor 5 is provided at the vehicle brake handle. If the color of part of the brake lever is special, which is adverse for the corresponding induction-type sensor to reflect the light ray or affects the reflected light ray, then the reflection enhancing member may be used. The reflection enhancing member is preferably an elastic soft rubber cover facilitating light-ray reflection that can be directly nested to the brake handle and preferably has a color such as white and red.

Further preferably, an inner cavity of the mounting base 1 is formed by a primary cavity 1b horizontally provided and a secondary cavity 1c that is integrally formed with and in communication with the primary cavity 1b, the primary cavity 1b and the secondary cavity 1c cooperate to be of a ┌ shape, and a quickly detachable pipe clamp 1d is provided at the step formed by the cooperation between the primary cavity 1b and the secondary cavity 1c. The first mounting through hole 1a is located at the proximal end of the lower end of the secondary cavity 1c and faces the brake handle. Such a compact structure of the mounting base does not only facilitate the installation of the induction-type sensor, to facilitate it to face the brake handle, but also facilitates the induction-type sensor to be fixed to the brake-lever base or the handle bar.

In usage, it is merely required to install the mounting base on the brake-lever base or the handle bar, and cause the induction-type sensor on it to face the brake handle. When the brake handle performs a braking action, because of the movement of the brake handle, its distance from the induction-type sensor is reduced, the intensity of a light ray that is reflected back from the brake handle and received by the induction-type sensor 5 is increased or the duration of the reflecting-back of the light ray is reduced, and the induction-type sensor sends a braking signal to the micro-controlling module 3. Subsequently, the micro-controlling module sends the braking signal via the wireless-signal emitting module to the external wireless-signal receiving module. The wireless-signal receiving module is formed by a controlling MCU, and a battery and a wireless-signal receiver that are connected to the controlling MCU, and the controlling MCU is connected to the turn light and a brake light. The wireless-signal receiver receives the braking signal or steering signal emitted by a wireless-signal emitting module, and the controlling MCU controls the corresponding turn light or brake light to be lightened. The wireless communication, the mode of the performance of the light lightening and the connection structures are in the prior art, are not what is claimed in the present disclosure, and are not discussed herein further.

Even in an emergency brake, when the brake handle is pressed very hard, to cause the brake handle to rotate by a largest angle, to cause the brake handle and the sensing terminal to contact, the extending sleeve can self-adaptively contract inwardly.

### The second embodiment

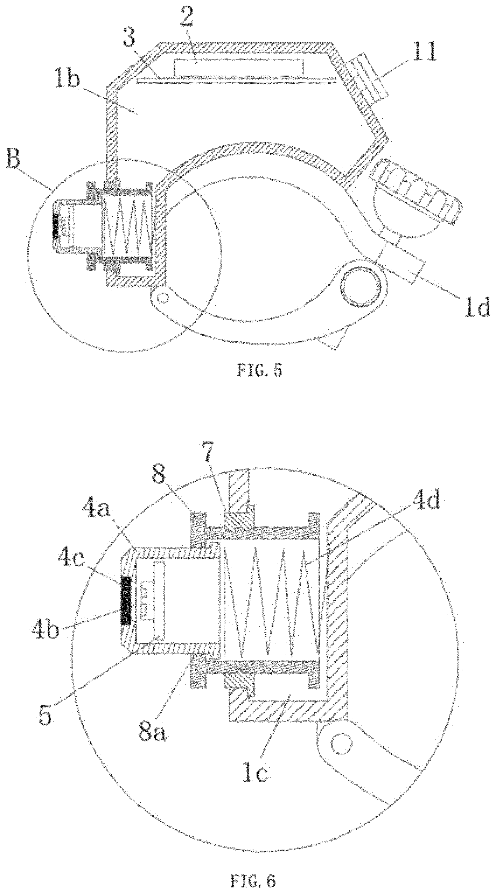

Referring to FIGS. 5 and 6, FIGS. 5 and 6 show an induction-type brake-alarming triggering device with a self-adaptive structure according to the present disclosure. Its structure is substantially the same as that of the first embodiment, and differs in that an axially regulating assembly for regulating the initial distance between the extending sleeve 4a and the brake handle is provided between the first mounting through hole 1a and the extending sleeve 4a. The axially regulating assembly can perform pre-regulation to the distance between the induction-type sensor and the brake handle, and such a structure enables the triggering device to be generically useful in vehicles of different distances between the brake handle and the handle bar.

In the present embodiment, the axially regulating assembly is formed by a rotary-knob base 7 fixed inside the first mounting through hole 1a and having an internal thread and a rotary-knob regulating cylinder 8 thread-connected to the rotary-knob base 7 and having one opened end, a third mounting through hole 8a facing the brake handle is provided at the bottom inside the rotary-knob regulating cylinder 8, and the extending sleeve 4a is slidably nested inside the third mounting through hole 8a.

The installing mode according to the present embodiment is the same as that of the first embodiment. After the installation has been completed, by regulating the distance between the induction-type sensor and the brake handle by using the axially regulating assembly according to the distance between the brake handle and the handle bar, the device can be used normally.

### The third embodiment

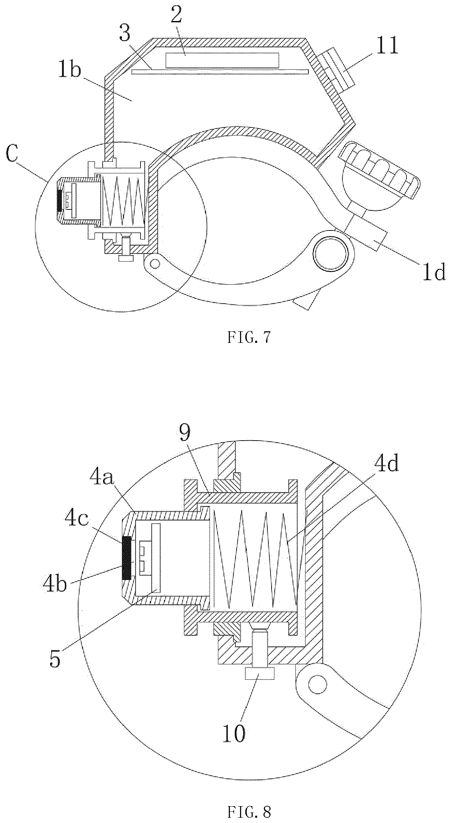

Referring to FIGS. 7 and 8, FIGS. 7 and 8 show an induction-type brake-alarming triggering device with a self-adaptive structure according to the present disclosure. Its structure is substantially the same as that of the first embodiment, and differs in that the axially regulating assembly is formed by a regulating cylinder 9 slidably nested inside the first mounting through hole 1a and having one opened end and a positioning screw 10 provided on the mounting base 1 and in cooperation with the regulating cylinder 9. After the distance of the regulating cylinder 9 has been regulated in place, the regulating cylinder 9 is fixed by using the positioning screw 10.

The advantage of such a structure is that, after the fine adjustment has been completed, the regulating cylinder may be fixed by using the first positioning screw, thereby preventing it from being influenced by an external force and thus accidently having an axial displacement, which affects the accuracy of the detection. Moreover, it has the advantages of a simple structure and a low cost.

The above-described embodiments are preferable embodiments of the present disclosure, are merely intended to facilitate the description on the present disclosure, and are not intended to limit the present disclosure in any form. Any equivalent embodiments that are made by a person skilled in the art by partial alternation or modification to the technical contents disclosed by the present disclosure without departing from the scope of the technical features of the present disclosure fall within the scope of the technical features of the present disclosure.

## Claims

1. An induction-type brake-alarming triggering device with a self-adaptive structure, wherein the device comprises a mounting base (1) provided at a brake-lever base or a handle bar on a side of a brake handle, an power-supply module (2) and a micro-controlling module (3) are provided in the mounting base (1), and the micro-controlling module (3) is wirelessly connected to an external warning light via a wireless-signal emitting module; and
the power-supply module (2) is connected to the micro-controlling module (3);
**characterised in that** a first mounting through hole (1a) is provided on one side of the mounting base (1) that faces the brake handle, a self-adaptive elastic extending assembly (4) is provided at an opening part of the first mounting through hole (1a), and an induction-type sensor (5) facing the brake handle is provided at the self-adaptive elastic extending assembly (4);
in an initial state, a distance between the induction-type sensor (5) and the brake handle is 0.5-5cm, and when the brake handle is moved toward the handle bar to perform a braking action, an intensity of a light ray that is reflected back from the brake handle and received by the induction-type sensor (5) is increased or a duration of the reflecting-back of the light ray is reduced, and the induction-type sensor (5) sends a braking signal to the micro-controlling module (3); and
when the brake handle touches a sensing terminal, the self-adaptive elastic extending assembly (4) correspondingly contracts.

2. The induction-type brake-alarming triggering device with a self-adaptive structure according to claim 1, wherein a reflection enhancing member (6) in cooperation with the induction-type sensor (5) is provided at the vehicle brake handle.

3. The induction-type brake-alarming triggering device with a self-adaptive structure according to claim 1, wherein an inner cavity of the mounting base (1) is formed by a primary cavity (1b) horizontally provided and a secondary cavity (1c) that is integrally formed with and in communication with the primary cavity (1b), the primary cavity (1b) and the secondary cavity (1c) cooperate to be of a ┌ shape, and a quickly detachable pipe clamp (1d) is provided at a step formed by the cooperation between the primary cavity (1b) and the secondary cavity (1c); and
the first mounting through hole (1a) is located at a proximal end of a lower end of the secondary cavity (1c) and faces the brake handle.

4. The induction-type brake-alarming triggering device with a self-adaptive structure according to claim 1, wherein the self-adaptive elastic extending assembly (4) comprises an extending sleeve (4a) nested inside the first mounting through hole (1a) and having one opened end, a second mounting through hole (4b) facing the brake handle is provided at a bottom inside the extending sleeve (4a), a protecting lens (4c) is provided inside the second mounting through hole (4b), and the induction-type sensor (5) is located inside the extending sleeve (4a); and
a tensioning spring (4d) is provided in an axial direction of the extending sleeve (4a) between the extending sleeve (4a) and an inner wall of the mounting base (1).

5. The induction-type brake-alarming triggering device with a self-adaptive structure according to claim 4, wherein an axially regulating assembly for regulating an initial distance between the extending sleeve (4a) and the brake handle is provided between the first mounting through hole (1a) and the extending sleeve (4a).

6. The induction-type brake-alarming triggering device with a self-adaptive structure according to claim 5, wherein the axially regulating assembly is formed by a rotary-knob base (7) fixed inside the first mounting through hole (1a) and having an internal thread and a rotary-knob regulating cylinder (8) thread-connected to the rotary-knob base (7) and having one opened end, a third mounting through hole (8a) facing the brake handle is provided at a bottom inside the rotary-knob regulating cylinder (8), and the extending sleeve (4a) is slidably nested inside the third mounting through hole (8a).

7. The induction-type brake-alarming triggering device with a self-adaptive structure according to claim 5, wherein the axially regulating assembly is formed by a regulating cylinder (9) slidably nested inside the first mounting through hole (1a) and having one opened end and a positioning screw (10) provided on the mounting base (1) and in cooperation with the regulating cylinder (9); and
after a distance of the regulating cylinder (9) has been regulated in place, the regulating cylinder (9) is fixed by using the positioning screw (10).

8. The induction-type brake-alarming triggering device with a self-adaptive structure according to claim 1, wherein in the initial state, the distance between the induction-type sensor (5) and the brake handle is 0.8-2cm.
